Europäisches Patentamt

European Patent Office

Office européen des brevets

(11) Publication number: **0 445 458 A1**

# (12) EUROPEAN PATENT APPLICATION

(21) Application number: 90302577.3

(22) Date of filing: **09.03.90**

(51) Int. Cl.5: **B62K 11/00**

(43) Date of publication of application:
**11.09.91 Bulletin 91/37**

(84) Designated Contracting States:
**ES FR GR IT**

(71) Applicant: **Shih, Chun Jih**
**No 49-3 Hsin Yi Street, Chung Hsiao Li**
**Hsing Chuang City, Taipei Hsien(TW)**

(72) Inventor: **Shih, Chun Jih**
**No 49-3 Hsin Yi Street, Chung Hsiao Li**
**Hsing Chuang City, Taipei Hsien(TW)**

(74) Representative: **Jones, Michael Raymond et al**
**HASELTINE LAKE & CO. Hazlitt House 28**
**Southampton Buildings Chancery Lane**
**London WC2A 1AT(GB)**

(54) **A body construction for a scooter.**

(57) An improved body construction for a scooter is provided for easy assembly, inspection and/or maintenance of the scooter. The scooter is composed of a front portion 10, a foot rest portion 20, a body 30 and an outer frame 40. The foot rest portion 20 is above ground surface at a predetermined distance, with one end thereof connected to the front portion 10 and the other end thereof connected to the body 30. The outer frame 40 supports the front portion 10, the foot rest portion 20, and the body 30. The body 30 is made up of a body cover 33, a seat 31, a tail bracket 32 and a driving assembly 34. The body cover 33 is integrally formed, the seat 31 is pivotally connected to the body cover 33 and the tail bracket 32 is fixed to a rear portion of the body cover 33 so that the body cover 33, the seat 31 and the tail bracket 32 can be lifted up together to expose the driving assembly for inspection and/or maintenance.

FIG.1

This invention relates generally to an improved body construction for a motor scooter.

The body cover of a conventional scooter is made up of a right side body cover, a left side body cover, a middle body cover and a storage box. When assembling such a scooter, the steps involved are complicated and difficult; besides, it is time-consuming. When inspection and/or maintenance of the various parts of the driving assembly inside the body of the scooter are necessary, each of the three body covers has to be taken down one by one, which not only takes much time but also requires proper tools; hence this is quite a troublesome task for the maintenance workers.

According to one aspect of the present invention, there is provided a body construction for a scooter, the scooter being composed of a front portion, a foot rest portion, a body and an outer frame, the foot rest portion being above ground surface at a predetermined distance with one end region thereof connected to the front portion and the other end region thereof connected to the body, the outer frame supporting the front portion, the foot rest portion and the body, and the body being made up of a body cover, a seat, a tail bracket and a driving assembly, wherein the body construction is characterised in that the body cover is integrally formed, the seat is pivotally connected to the integrally formed body cover, and the tail bracket is fixed to a rear portion of the body cover in a manner such that the body cover, the seat and the tail bracket can be lifted up together.

One embodiment of the body construction includes means for pivotally connecting the body cover to a rear portion of the outer frame.

In an alternative embodiment of body construction, the body cover is pivotally connected at a front end portion thereof to a rear end region of the foot rest portion.

Preferably the body construction of the present invention also includes means for releasably locking the body cover in a closed position in which the driving assembly is substantially covered by the body cover, and means for absorbing any shock which is caused on the body cover in the closed position.

Another aspect of the present invention provides a sub-assembly for a scooter, the sub-assembly comprising an integrally formed body cover, a seat pivotally connected to the body cover, and a tail bracket fixed to a rear portion of the body cover.

The sub-assembly composed of the body cover, the seat and the tail bracket form a unit which can be lifted up to expose the driving assembly for easy inspection and/or maintenance.

The use of such a unit facilitates assembly, reduces the work hours and lowers the cost.

The present invention can be more fully understood by reference to the following description and accompanying drawings, which form an integral part of this application:

Fig. 1 is a side elevational view showing a body construction for a scooter according to a preferred embodiment of the present invention; and

Fig. 2 is an enlarged, schematic side elevational view showing a portion denoted by a circle I in Figure 1.

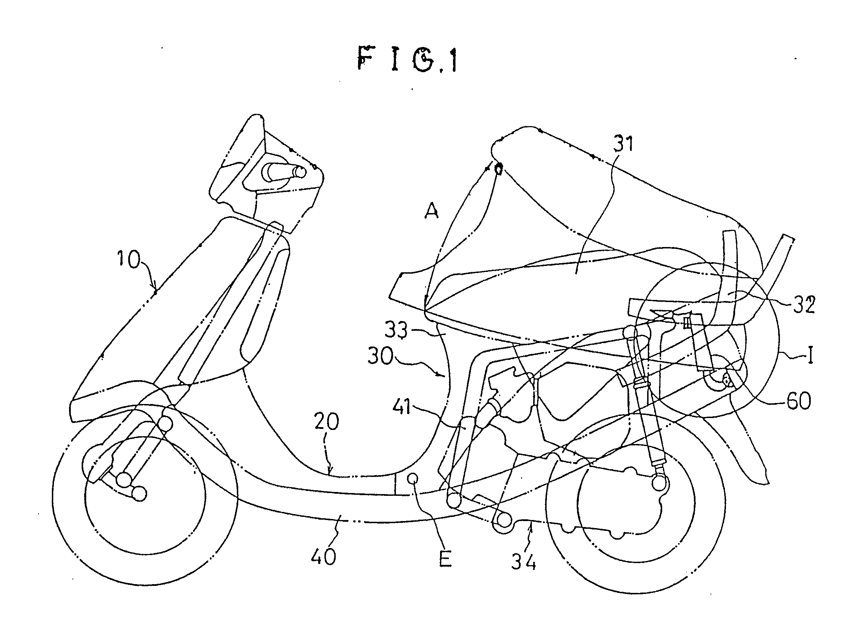

Referring now to Fig. 1, a scooter according to a preferred embodiment of the present invention is made up of a front portion 10, a foot rest portion 20, a body 30 and an outer frame 40. As shown in Fig. 1, the foot rest portion 20 is above ground surface at a predetermined distance, with one end thereof connected to the front portion 10 and the other end thereof connected to the body 30. The outer frame 40 is an exposed type, having a rib 41 devised in the interior of the body 30. The outer frame 40 is used to support the front portion 10, the foot rest portion 20 and the body 30 so that these three parts can be assembled together.

The body 30 is made up of a seat 31, a body cover 33, a tail bracket 32 and a driving assembly 34. The body cover 33 is formed into an integral cover body, as different from a body cover of a conventional scooter which has a separate right side body cover, a separate left side body cover, and a separate middle body cover. The seat 31 is pivotally connected to the upper left corner (as viewed from Fig. 1) of the body cover 33. The tail bracket 32 is fixed to a rear portion of the body cover 33. The assembly of the body cover 33, the seat 31 and the tail bracket 32 provides an interior space for accommodating the driving assembly 34. When assembled, the assembling process of the body 30 may be carried out with a reduced working time and at a lower cost.

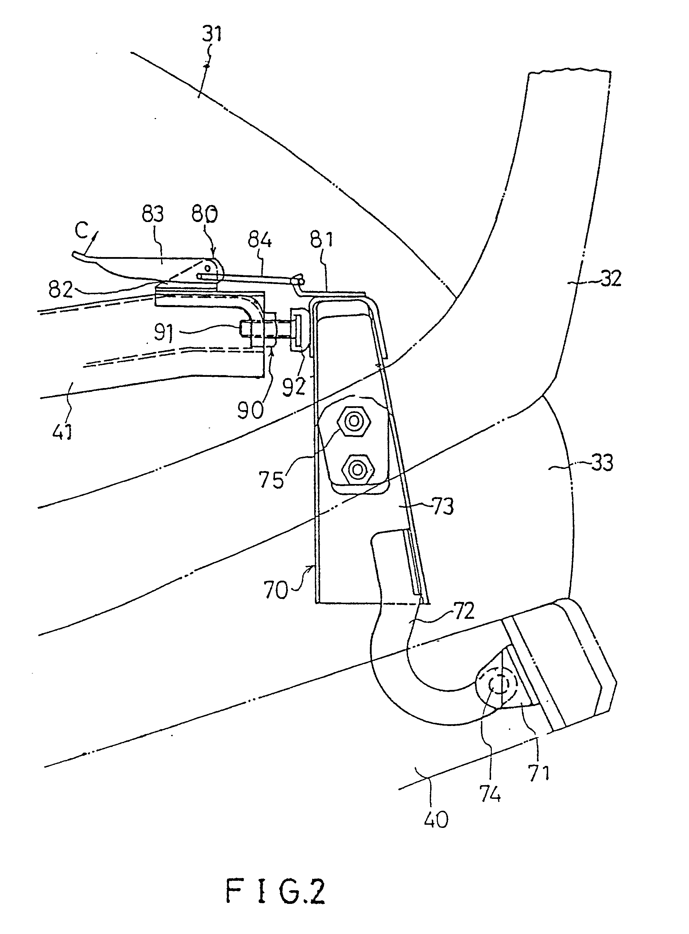

A pivoting mechanism 60 is provided for allowing the assembly of the body cover 33, the seat 31 and the tail bracket 32 to be pivotally lifted up along the direction of arrow A (Fig. 1) for inspection and/or maintenance of various parts of the driving assembly 34. As shown in Fig. 2, the pivoting mechanism 60 is made up of a pivoting device 70, a locking device 80 and a shock absorbing device 90.

The pivoting device 70 includes a pivoting base member 71, a hook-shape pivoting arm 72 and a fixing member 73. The fixing member 73 may be fixed to an inner side of the tail bracket 32 by a screw 75 or similar fasteners and has a locking hook portion 81 provided at a free end thereof. The pivoting base member 71 may be mounted to an inner side of a rear portion of the frame 40 by soldering or similar manners. The hook-shape pivoting arm 72 is connected at one end to the fixing member 73. The other end of the hook-shape pivoting arm 72 is pivotably mounted to the pivoting base member 71 by a pivoting shaft 74. The hook-shape pivoting arm 72 is configured and arranged so that it will not interfere with the frame 40 when it pivots around the pivoting shaft 74.

The locking device 80 is composed of a locking base member 82 fixed to the rib 41 of the frame 40, a handle portion 83 pivoted to the locking base member 82, and a locking ring member 84 pivoted to the handle portion 83. The locking ring member 84 is used to engage the locking hook portion 81 of the pivoting device 70 so that the pivoting device 70 may be locked as shown in Fig. 2. By pulling the handle portion 83 up in the direction of arrow C, the locking ring member 84 may be disengaged from the locking hook portion 81 so as to allow the pivoting device 70 to carry out a predetermined pivoting operation.

The shock absorbing device 90 is composed of a threaded component 91 and a shock absorbing component 92. The threaded component 91 is configured and arranged so that it may screw in the end portion of the rib 41. The shock absorbing component 92 is provided on an outer end of the threaded component 91 and is made up of a suitable shock absorbing material, such as rubber. When the pivoting device 70 is locked by the locking device 80, the length of a portion of the threaded component 91 extending out of the end portion of the rib 41 may be adjusted by rotating the threaded component 91 so that the shock absorbing component 92 engages against the fixing member 73 to allow the shock generated on the pivoting device 70 to be absorbed.

When inspection and/or maintenance of various parts of the driving assembly 34 is necessary, the seat 31 is first lifted. The handle portion 83 of the locking device 80 is then pulled up in the direction of the arrow C shown in Fig. 2 so that the locking ring member 84 is allowed to be disengaged from the locking hook portion 81. Subsequently, the assembly of the body cover 33, the seat 31 and the tail bracket 32 may be lifted up together to its open position by being pivoted about the pivoting shaft 74 of the pivoting device 70 in the direction of the arrow A shown in Fig. 1 so that the driving assembly 34 is exposed for inspection and/or maintenance.

When the inspection and/or maintenance process is finished, the assembly of the body cover 33, the seat 31 and the tail bracket 32 may be moved back to its close position by being pivoted about the pivoting shaft 74 of the pivoting device 70 in the direction opposite to the direction of the arrow A shown in Fig. 1 so that the driving assembly 34 is covered. The assembly of the body cover 33, the seat 31 and the tail bracket 32 is locked as shown in Fig. 2 by the locking device 80 and, thanks to the shock absorbing device 90, is substantially free from any shock which, for example, may be caused when the scooter is traveling.

According to an alternative embodiment of the present invention, the body cover 33 may be pivotally connected at a front end portion thereof to a rear end of the foot rest portion 20, for example at a portion represented by a point E shown in Fig. 1. Then, the assembly of the body cover 33, the seat 31 and the tail bracket 32 may be lifted up by being pivoted about the point E in a direction toward the front portion 10 of the scooter. Under such an arrangement, the objects of the present invention may also be achieved.

As described above, since the body cover 33 of the improved body construction for the scooter according to the present invention is integrally formed with the seat 31 being pivoted thereto and the tail bracket 32 being fixed thereto, these three parts may be lifted up together. Their assembly and installation are simple. The inspection and/or maintenance of the various parts of the driving assembly 34 is convenient. Both the work hours and the production costs are reduced.

While the invention has been described in terms of what is presently considered to be the most practical and preferred embodiments, it is to be understood that the invention need not be limited to the disclosed embodiments. On the contrary, it is intended to cover various modifications and similar arrangements included within the spirit and scope of the appended claims, the scope of which should be accorded the broadest interpretation so as to encompass all such modifications and similar structures.

## Claims

1.  A body construction for a scooter, the scooter being composed of a front portion, a foot rest portion, a body and an outer frame, the foot rest portion being above ground surface at a predetermined distance with one end region thereof connected to the front portion and the other end region thereof connected to the body, the outer frame supporting the front portion, the foot rest portion and the body, and the body being made up of a body cover, a seat, a tail bracket and a driving assembly, wherein the body construction is characterised in that the body cover is integrally formed, the seat is pivotally connected to the integrally formed body cover, and the tail bracket is fixed to a rear portion of the body cover in a manner such that the body cover, the seat and the tail bracket can be lifted up together.

2. A body construction as claimed in claim 1, which also includes means for pivotally connecting the body cover to a rear portion of the outer frame.

3. A body construction as claimed in claim 1, wherein the body cover is pivotally connected at a front end portion thereof to a rear end region of the foot rest portion.

4. A body construction as claimed in claim 1, 2 or 3, which also includes means for releasably locking the body cover in a closed position in which the driving assembly is substantially covered by the body cover, and means for absorbing any shock which is caused on the body cover in the closed position.

5. A sub-assembly for a scooter, the sub-assembly comprising an integrally formed body cover, a seat pivotally connected to the body cover, and a tail bracket fixed to a rear portion of the body cover.

# F I G.1

EP 0 445 458 A1

FIG.2

European
Patent Office

**EUROPEAN SEARCH
REPORT**

Application Number

**EP 90 30 2577**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | MOTOR. vol. 39, no. 37, 12 September 1952, DEN HAAG NL pages 1110 - 1111; ""Motor"-Roadtest van de Puch Scooter" <br> * the whole document * | 1,3,5 | B 62 K 11/00 |
| Y | US-A-2 493 287  (M.HATFIELD) <br> * column 1, line 49 - column 2, line 49; figures 1-3 * | 1,2,5 | |
| Y,A | US-A-4 596 301  (HONDA GIKEN KOGYO K.K.) <br> * column 3, line 46 - column 4, line 47; figures 1-3 * | 1,2,5,4 | |
| A | GB-A-2 054 488  (HONDA GIKEN KOGYO K.K.) <br> * the whole document * | 1,3,4,5 | |
| A | US-A-4 413 700  (HONDA GIKEN KOGYO K.K.) <br> * column 3, line 21 - column 4, line 22; figures 1, 2 * | 1,2,4,5 | |
| A | DE-B-1 022 108  (PROGRESS-WERK OBERKIRCH) <br> * the whole document * | 1,4,5 | |
| | | | TECHNICAL FIELDS SEARCHED (Int. Cl.5) |
| | | | B 62 K <br> B 62 J <br> B 62 M |

The present search report has been drawn up for all claims

| Place of search | Date of completion of search | Examiner |
|---|---|---|
| The Hague | 08 November 90 | CZAJKOWSKI A.R. |